# EUROPEAN PATENT APPLICATION

(11) **EP 1 705 063 A1**
(43) Date of publication of application: **27.09.2006**
(21) Application number: 05006390.8
(22) Date of filing: 23.03.2005
(51) Int. Cl.: B60R 1/00

(54) **Vehicle blind spot monitoring system**

(71) Applicant: IEE INTERNATIONAL ELECTRONICS & ENGINEERING S.A., 6468 Echternach (LU)
(72) Inventor: Becker, Guido, 66679 Losheim am See (DE); Schmiz, Marc, 2629 Luxembourg (LU)
(74) Representative: Beissel, Jean

(57) **Abstract**

A vehicle blind spot monitoring system comprises at least one camera with a lens, said camera being positioned on the vehicle for viewing the vehicle surroundings, and a display located in said vehicle, said display being electrically coupled to said camera for displaying images generated by said camera. According to the invention the camera comprises a reflector system with a first reflector and a second reflector arranged at a certain distance from each other, said first reflector having a first shape adapted for providing a reflection of a wide-angle scene onto said second reflector and said second reflector having a second shape adapted for providing a second reflection at said lens of said camera.

## Description

### Introduction

This invention relates to

The present invention generally relates to vision systems for vehicles, and more particularly to a vehicular blind spot vision system, which provides a driver of a vehicle with information concerning objects located in the driver's blind spot

A continuing problem that presents itself to operators of automotive vehicles is the difficulty in seeing obstacles near the vehicle but in a location that is difficult to observe from the driver's seat. Such regions are e.g. located on both sides of the vehicle, slightly behind the operator thereof and are commonly referred to as "blind spots". These right-side and left-side blind spots are a source of numerous accidents when a driver makes a turn or a lane change and does not see another vehicle in the blind spot.

The most common solution to the problem of blind spots has been to use mirrors to aid the operator of the vehicle in determining whether obstacles are present in a blind spot. Such mirrors have been made in a variety of shapes and mounted in various locations to provide the operator with the greatest ability to detect obstacles in particular blind spots. For example, it is commonplace today to see a concave mirror mounted to the right side of a vehicle aimed at the right-side blind spot. Mirrors provide the operator with some information regarding the presence of obstacles in certain of a vehicle's blind spots, but they are less useful at night and under adverse weather conditions. Hence, a more complete and satisfactory solution is still sought by many

A known alternative to the use of mirrors to detect obstacles in a vehicle's blind spots is to use radar systems for sensing the presence of obstacles. These prior art techniques then generate a signal to the vehicle operator indicative of the presence of such an obstacle. Unfortunately, these systems only provide a visual or audible warning, and do not allow the vehicle operator to actually see what is in the vehicle's blind spot.

European patent application EP-A-1 179 958 discloses a system for monitoring the vehicle blind-spot in which a synthetic image of the vehicle surroundings is generated using a plurality of cameras arranged in the vehicle. This system however requires complicated image processing in order to combine the individual images shot by the different cameras to an error free combined image to be displayed to the driver.

### Object of the invention

The object of the present invention is to provide an improved vehicle blind spot monitoring system.

### General description of the invention

This object is achieved by a vehicle blind spot monitoring system according to claim 1. The vehicle blind spot monitoring system of the present invention comprises at least one camera with a lens, said camera being positioned on the vehicle for viewing the vehicle surroundings, and a display located in said vehicle, said display being electrically coupled to said camera for displaying images generated by said camera. According to the invention the camera comprises a reflector system with a first reflector and a second reflector arranged at a certain distance from each other, said first reflector having a first shape adapted for providing a reflection of a wide-angle scene onto said second reflector and said second reflector having a second shape adapted for providing a second reflection at said lens of said camera.

The first reflector is preferably mounted in front of the camera lens and has an outwardly curved outer surface such that the axis of the curved outer surface is preferably parallel to the optical axis of the camera. The second reflector, which has preferably an inwardly curved surface, is then mounted in front of the first reflector in such a way that an axis of the inwardly curved surface is parallel to the axis of the camera. The first reflector captures an image scene which, depending on the configuration of the reflector shape, may comprise 360° in a plane which transverse to the axis of the curved surface. This captured panoramic scene is reflected by the first reflector on the second reflector, which is shaped for providing a second reflection of the panoramic scene though an aperture of the first reflector onto the lens of the camera. It follows that the camera sees the entire field of view of the first reflector and is accordingly suitable for monitoring a super-wide field of view outside the vehicle

It follows that the vehicle blind spot monitoring system of the present invention enables to monitor the entire surroundings e.g. on the passenger side of the vehicle with one single camera system and may thus considerably increase the field of view of the driver.. As a result blind spots may be considerably reduced.

The first and second reflectors are preferably mounted inside a transparent housing, which may be mounted in front of the camera lens. In operation, the camera and the reflector system are preferably mounted vertically, so that the field of view of the system extends in a horizontal plane,

It should be noted that the camera may comprise a charge coupled device (CCD) or a complementary metal oxide semiconductor sensor (CMOS) and provides an electronic signal that is representative of the image projected onto the image sensor. This image signal is digitized and may be transferred directly to the display inside the vehicle. In a different embodiment, the image signal may first be transferred to an image processing apparatus for processing of the image and subsequently represented on the display. The captured image may e.g. be enhanced by adding colors or auxiliary lines representing the contours of the vehicle or the image may be corrected in order to compensate for lens and reflector aberration..

In a preferred embodiment, the said first reflector has a generally hyperboloid shape and wherein a convex surface of said hyperboloid shape is directed towards said second reflector. The second reflector has preferably a generally ellipsoid shape and wherein a concave surface of said ellipsoid shape being is towards said first reflector. By suitably shaping the first and second reflector surfaces, the reflector system provides a reflected image on the camera lens, which is substantially free from field curvature effects and astigmatic effects.

Depending on the application of the vehicle blind spot monitoring system, the desired field of view is between 180° and 270°. Large size vehicles such as trucks for instance have very huge blind spot areas around the truck, especially in front of the truck and on the passenger side of the truck. In order to cover this huge area by one single vehicle blind spot monitoring system, the reflector system is preferably arranged at an outer front corner of the passenger side and covers a field of view of 270°. For passenger cars, the blind spot area extends primarily along the passenger side, so that the required field of view in this case must cover up to 180°. The reflector system may then be arranged in a housing of an outside rear view mirror.

The required field of view may be advantageously obtained by suitably shaping the first and/or the second reflector surface, so that the reflector system only captures the required region. The shapes of the first and second reflectors are preferably such that an optical axis of the reflector system is different from a geometrical axis of said reflector system. The offset of the optical axis results in a field of view, which leaves out the vehicle itself. The second reflection of the captured scene is then preferably configured such that the representation on the image plane of the camera uses the imager sensor surface in an optimal way. The entire surface of the imager sensor may thus be used for recording a representation of the interesting part of the vehicle surroundings, thus increasing the overall quality of the image displayed to the driver.

It should be noted, that the recorded image may be directly represented on the display inside the vehicle. However in a preferred embodiment, the system further comprises processor means for distortion correction of an image generated by the camera prior to the representation thereof on the display Further to the error correction, the image may be processed in order to enhance contrast, to add colors for better distinction between different objects, to add auxiliary lines indication the contours of the vehicle itself, etc.

### Detailed description with respect to the figures

The present invention will be more apparent from the following description of several not limiting embodiments with reference to the attached drawings, wherein
- Fig-1:: shows a schematic representation of the components of a vehicle blind spot monitoring system;

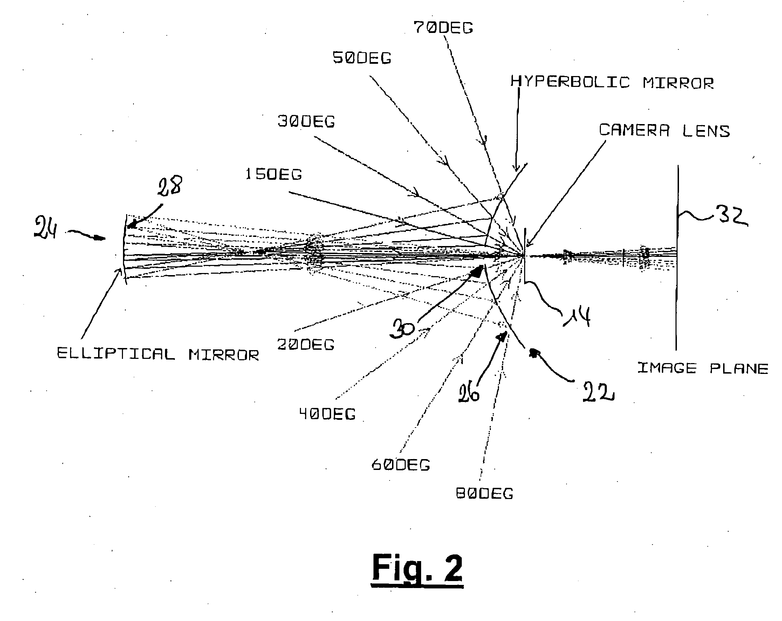

- Fig.2:: shows a sectional of a reflector system with a first hyperboloidal mirror and a second, ellipsoidal mirror;
- Fig.3:: schematically represents the field of view of a vehicle a vehicle blind spot monitoring system around a vehicle.

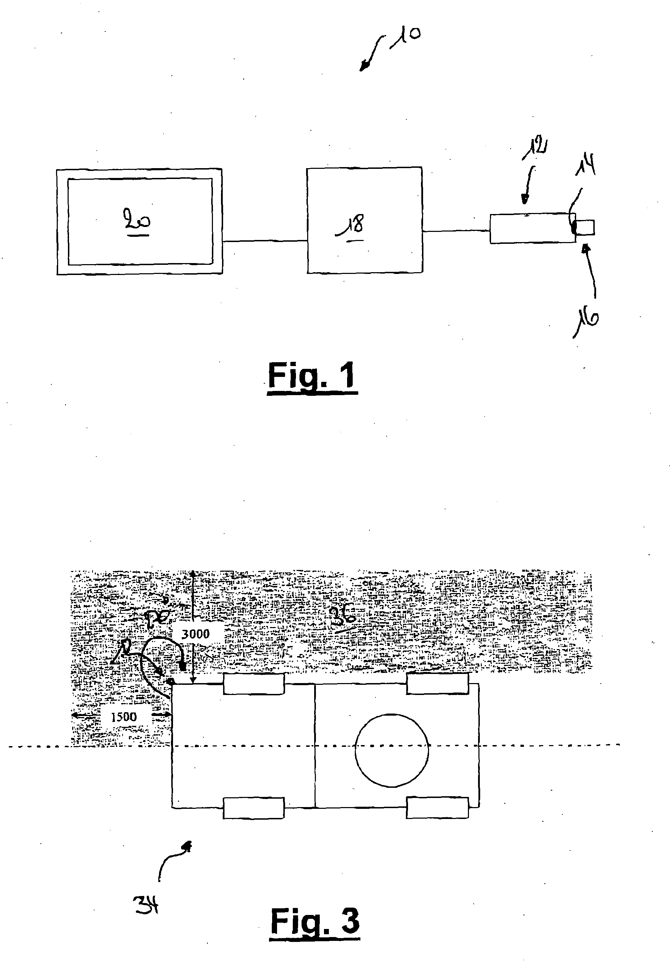

Fig. 1 schematically shows the components of an embodiment of a vehicle blind spot monitoring system.. The system comprises a camera 12 with a lens 14, e.g. a simple CCD camera or a CMOS camera, a reflector system 16, arranged in front of the camera lens 14. The camera is electrically connected to a processor means 18, for processing the image recorded by the camera 12 and for transferring the processed image to a display 20 mounted inside a vehicle (not shown).

The reflector system a first reflector 22 and a second reflector 24 arranged at a certain distance from each other e.g. inside a transparent housing which may be mounted in front of the camera lens 14. The first reflector has an outwardly curved outer surface 26, preferably of a generally hyperboloid shape, which is directed towards said second reflector 24. The second reflector has an inwardly curved surface 28, e.g. of a generally ellipsoid shape, which is directed towards the first reflector 22.

The first reflector 22, 26 captures a wide angled image scene and reflects the scene onto the second reflector 24, 28, which is shaped for providing a second reflection of the panoramic scene though an aperture 30 of the first reflector 24 onto the lens 14 of the camera, thus generating a representation of the scene on the image plane 32 of the imager sensor. It follows that the camera sees the entire field of view of the first reflector and is accordingly suitable for monitoring a super-wide field of view outside the vehicle.

By suitably shaping the reflector surfaces 26 and 28, the field of view of the blind spot monitoring system may be adjusted to the required shape. In the case of a truck for instance, the field of view is preferably shaped so as to cover 270°. In this case, the camera 12 with the reflector system 16 is preferably mounted on a front corner on the passenger side of the truck 34. The field of view 36 of the system (represented in grey shading) thus extends from the front region of the truck along the passenger side of the truck and accordingly the blind spot areas are substantially eliminated.

## Claims

1. Vehicle blind spot monitoring system, comprising at least one camera with a lens, said camera being positioned on the vehicle for viewing the vehicle surroundings, and a display located in said vehicle, said display being electrically coupled to said camera for displaying images generated by said camera, **characterized in that** said camera comprises a reflector system with a first reflector and a second reflector arranged at a certain distance from each other, said first reflector having a first shape adapted for providing a reflection of a wide-angle scene onto said second reflector and said second reflector having a second shape adapted for providing a second reflection at said lens of said camera

2. Vehicle blind spot monitoring system according to claim 1, wherein said first reflector has a generally hyperboloid shape and wherein a convex surface of said hyperboloid shape is directed towards said second reflector.

3. Vehicle blind spot monitoring system according to claim 1 or 2, wherein said second reflector has a generally ellipsoid shape and wherein a concave surface of said ellipsoid shape being is towards said first reflector.

4. Vehicle blind spot monitoring system according to any one of claims 1 to 3, wherein the shapes and sizes of the first and second reflectors, and their respective positions, are such that the second reflection provided at the lens of said camera is substantially free of field curvature effects and astigmatic effects.

5. Vehicle blind spot monitoring system according to any one of claims 1 to 4, wherein the shapes of the first and second reflectors are such that an optical axis of the reflector system is different from a geometrical axis of said reflector system.

6. Vehicle blind spot monitoring system according to any one of claims 1 to 5, further comprising processor means for distortion correction of an image generated by the camera prior to the representation thereof on the display.

7. Vehicle blind spot monitoring system according to any one of claims 1 to 6, wherein said reflector system is arranged in a housing of an outside rear view mirror.

8. Vehicle blind spot monitoring system according to any one of claims 1 to 6, wherein said reflector system is arranged at an outer front corner of the passenger side.
